# EUROPEAN PATENT SPECIFICATION

(11) **EP 2 741 533 B1**
(45) Date of publication and mention of the grant of the patent: **18.03.2015**
(21) Application number: 12306538.5
(22) Date of filing: 07.12.2012
(51) Int. Cl.: H04W 16/32, H04W 72/08

(54) **A method for inter-cell interference-coordination, and a base station therefor**
Verfahren zur Interferenzkoordination zwischen Zellen und eine Basisstation dafür
Procédé pour coordination d'interférence intercellulaire et station de base pour celui-ci

(43) Date of publication of application: 11.06.2014
(73) Proprietor: ALCATEL LUCENT, 92100 Boulogne-Billancourt (FR)
(72) Inventor: Stanze, Oliver, 70499 Stuttgart (DE); Weber, Andreas, 74251 Lehrensteinsfeld (DE); Halbauer, Hardy, 76275 Ettlingen (DE); Cesar, Bozo, 70439 Stuttgart (DE)
(74) Representative: Kleinbub, Oliver

(56) References cited:
- WO-A1-2012/061982
- US-A1- 2012 207 025
- NOKIA SIEMENS NETWORKS: "On TDM eICIC Coordination for Macro+Pico Cases", 3GPP DRAFT; R3-102817 PICOMACRO_TDMEICICCOORD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453624, [retrieved on 2010-10-02]

## Description

### Field of the invention

The invention relates to a method for inter-cell interference-coordination by coordination of transmission from a first and at least one further base station, and a base station adapted to perform said method.

### Background

In heterogeneous network (HetNet) scenarios using standards like e.g. Third Generation Partnership Project Long Term Evolution (3GPP LTE) standard, so-called pico base stations with their pico cells are placed under the coverage of a so-called macro base station. A pico base station typically covers a small area e.g. in buildings, train stations or aircrafts or outside due to its lower power, whereas a macro base station covers a larger area than a pico base station, as e.g. an outdoor area. Pico base stations enable a densification of wireless cellular network by providing additional capacity to certain HotSpots.

Heterogeneous networks often apply the concept of cell range extension (CRE) to increase the overall system performance, as e.g. spectral efficiency or cell-border throughput. In case of cell range extension, a preferably cell-specific bias is applied to each pico cell. User terminals are still served by pico cells as long as the received signal of the macro cell does not exceed the received signal of the pico cell by at least the bias value. So user terminals served by a pico base station might operate at a negative signal to interference and noise ratio (SINR) which may result in performance problems on control and data channels, as on the physical downlink control channels (PDCCH) and the physical downlink shared channels (PDSCH). To avoid these problems, in the standard 3GPP LTE Rel. 10 the so-called concept of enhanced inter-cell interference-coordination (eICIC) is introduced. In case of eICIC, the macro base station sends a predefined number of so-called almost blank subframes (ABS) during an also predefined ABS period, which only contain reference symbols. The sending of almost blank subframes by the macro base station results in a significantly reduced interference for user terminals served by the pico base station, especially for those user terminals which are affected by the cell range extension, a.k.a. cell-border user terminals, and therefore are operating at a negative SINR level. This is exploited by the pico base station scheduler by preferably scheduling its cell-border user terminals to the almost blank subframes of the corresponding macro cell. Due to the missing macro cell interference in the almost blank subframes, the cell-border user terminals normally do not have performance problems on PDCCH and PDSCH. Cell-inner user terminals of the pico base station may be scheduled to almost blank subframes or non almost blank subframes, i.e. subframes others than almost blank subframes.

If a HotSpot is quite large, e.g. a shopping mall, it may be served by multiple pico base stations to maximize the available capacity. These pico base stations may be distributed or co-located.

If multiple pico base stations applying CRE are used to serve a single HotSpot, the coverage area of the pico cells can be separated in different areas which highly differ in the interference situation for user terminals inside these areas.

In a first area, a received signal from a serving pico base station is significantly higher than a received signal from an interfering macro base station or an interfering pico base station. Thus, user terminals inside the first area are operating at a positive SINR level and do not require the usage of dedicated interference management techniques. However, interference management techniques may further increase the performance.

In a second area, a received signal from a serving pico base station is significantly higher than a received signal from an interfering pico base station, but due to the bias based CRE lower than the received signal from an interfering macro base station. Thus, user terminals inside the second area suffer from strong macro-to-pico interference and therefore may not be able to receive PDCCH and PDSCH with acceptable error rates.

In a third area, a received signal from a serving pico base station is significantly higher than a received signal from an interfering macro base station, but a received signal from an interfering pico base station is nearly as high. Thus, user terminals inside the third area suffer from high pico-to-pico interference.

In a fourth area, a received signal from a serving pico base station is lower than a received signal from an interfering macro base station and is nearly as high as a received signal from an interfering pico base station. Thus, user terminals inside the fourth area suffer from high macro-to-pico and high pico-to-pico interference.

In order to maximize the system performance, the different interference situations in the different areas have to be addressed by corresponding ICIC mechanisms.

3GPP LTE Rel. 10 introduces enhanced inter-cell interference-coordination (eICIC) to address the macro-to-pico interference in case of CRE. eICIC is a time-domain ICIC scheme, based on subframe blanking which can result in significant performance gains in a macro-to-pico interference scenario. However, pico-to-pico interference is not addressed by eICIC. This problem may be addressed by a more general time domain ICIC scheme in which macro base stations and pico base stations are using subframe blanking. Subframe blanking of macro base stations addresses the macro-to-pico interference, while subframe blanking of pico base stations addresses the pico-to-pico interference. However, additional subframe blanking results in a higher number of unused resources and therefore in a reduced system performance.

Interference mitigation according to the prior art is disclosed in US 2012/0207025 A1

Instead of time-domain ICIC schemes, frequency domain ICIC (FD-ICIC) schemes might also be used to address the different interference problems described above. However, the usage of FD-ICIC in a single-carrier system is limited to small bias values, so the potential of CRE is limited if FD-ICIC is used.

Other advanced ICIC methods like horizontal or vertical coordinated beamforming may be applied to increase the performance on the data channel in all the different interference areas named above, but they are not able to handle the problem on common control channels, as e.g. on PDCCH, in the first and fourth area described above which are based on the bias-based CRE.

### Summary

The object of the invention is thus to propose a method for inter-cell interference-coordination by coordination of transmission from macro and pico base stations with a reduced pico-to-pico interference and at the same time with a high resource usage.

The basic idea of embodiments of the invention is a hierarchical ICIC for heterogeneous networks (HetNets) comprising macro and pico base stations, with the macro-to-pico interference and the pico-to-pico interference being addressed in consecutive steps.

In a first step, the macro-to-pico interference is addressed. In this step the macro-to-pico interference is addressed by eICIC. The result of this step is not an assignment or schedule of certain user terminals to certain dedicated resources, but two preselections of user terminals served by a pico base station and resources, namely:
- First preselection: ABS resources and user terminals served by the pico base station which suffer from high macro interference, e.g. user terminals in the second or fourth area described above.
- Second preselection: Non-ABS resources and user terminals served by the pico base station which do not suffer from high macro interference, e.g. user terminals in the first or third area described above.

While ABS and non-ABS resources have to be disjoint, the user terminals served by the pico base station of the first and second preselection may be but have not to be disjoint. As already mentioned above, the first and second preselection are not a final scheduling decision. Instead they act as an input for a second step described in the following.

In the second step, the pico-to-pico interference is addressed. In this step, known concepts for ICIC, like virtual sectorization, soft frequency reuse, etc. may be applied, depending on the underlying interference situation. The result of the second step is an assignment or schedule of user terminals to resources. The scheduling decision in this step is based on the preselection results of the first step. Therefore this step can be subdivided in two sub-steps:
- Step 2A: Handling of pico-to-pico interference in ABS
- Step 2B: Handling of pico-to-pico interference in non-ABS

The ICIC concepts which are applied in step 2A and step 2B may be different, which will be described in the following in detail.

In embodiments of the invention, either one of the steps 2A and 2B, or both steps 2A and 2B are applied.

The object is thus achieved by a method for coordination of transmission from a first base station and at least two further base stations having coverage areas lying within the coverage area of the first base station, wherein
- user terminals that experience an interference from said first base station which is higher than a first threshold value are grouped in a first group and almost blank subframes are preselected for said user terminals of the first group,
- user terminals that experience an interference from said first base station which is lower than the first threshold value are grouped in a second group and non almost blank subframes are preselected for said user terminals of the second group,
- and user terminals of the first group that experience an interference from at least one of said at least two further base stations which is higher than a second threshold value are assigned to resources within said almost blank subframes that are disturbed by an interference which is lower than the second threshold value.

The object of the invention is furthermore achieved by a base station for coordination of transmission from said base station, a first base station and at least one further base station, said base station and said at least one further base station having coverage areas lying within the coverage area of the first base station, wherein the base station is adapted to
- group user terminals that experience an interference from said first base station which is higher than a first threshold value in a first group and preselect almost blank subframes for the user terminals of the first group,
- group user terminals that experience an interference from said first base station which is lower than the first threshold value in a second group and preselect non almost blank subframes for the user terminals of the second group,
- and assign user terminals of the first group that experience an interference from said at least one further base station which is higher than a second threshold value to resources within said almost blank subframes that are disturbed by an interference which is lower than the second threshold value.

The invention is described in the following within the framework of 3GPP LTE, however as the invention is not restricted to 3GPP LTE, but can in principle be applied in other networks that need to coordinate transmissions from neighbouring base stations, like e.g. in WiMAX networks (WiMAX = Worldwide Inter-operability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows the interference situation in heterogeneous networks comprising a macro base station and two pico base stations with directional antennas and cell range extension.
Fig. 4 schematically shows the handling of pico-pico interference in almost blank subframes in heterogeneous networks according to an embodiment of the invention.
Fig. 5 schematically shows the handling of pico-pico interference in non almost blank subframes in heterogeneous networks according to an embodiment of the invention.
Fig. 6 schematically shows a message sequence chart for inter-cell interference-coordination by means of an appropriate resource assignment according to an embodiment of the invention.

### Description of the embodiments

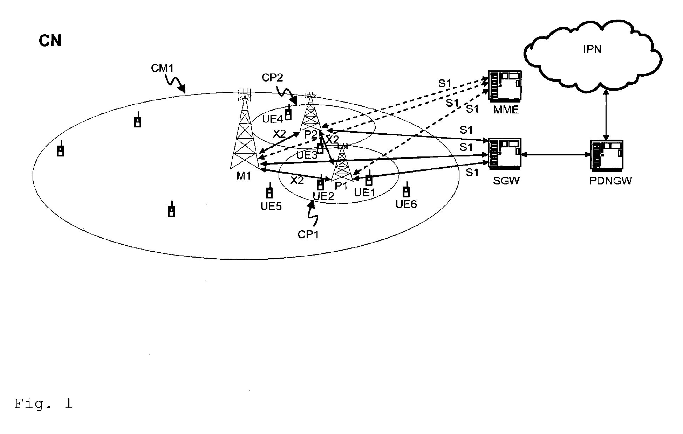

Fig. 1 shows as an example of a communication network in which the invention can be implemented a communication network CN according to the standard 3GPP LTE.

Said communication network CN comprises a macro base station M1, a first and a second pico base station P1 and P2, user terminals UE1-UE6, a serving gateway SGW, a packet data network gateway PDNGW, and a mobility management entity MME.

The user terminals UE1, UE2 and UE3 are connected via radio connections to the first pico base station P1, the user terminal UE4 is connected via radio connections to the second pico base station P2, and the user terminals UE5 and UE6 are connected via radio connections to the macro base stations M1. In future evolutions of LTE, each of the user terminals UE1-UE6 could also be connected via radio connections to multiple macro and/or pico base stations. The Macro base station M1 is in turn connected to the serving gateway SGW and to the mobility management entity MME, i.e. to the evolved packet core (EPC), via the so-called S1 interface. In the same way, the pico base stations P1 and P2 are connected to the serving gateway SGW and to the mobility management entity MME.

The macro base station M1 and the pico base stations P1 and P2 are connected among each other via the so-called X2 interface. The macro base station M1 and the pico base stations P1 and P2 can be connected among each other via radio connections or via fixed line connections.

The serving gateway SGW is connected to the packet data network gateway PDNGW, which is in turn connected to an external IP network IPN.

The S1 interface is a standardized interface between the macro base station M1 or one of the pico base stations P1 and P2, i.e. an eNodeB in this example, and the Evolved Packet Core (EPC). The S1 interface has two flavours, S1-MME for exchange of signalling messages between one of the macro or pico base station M1, P1, P2 and the mobility management entity MME and S1-U for the transport of user datagrams between one of the macro or pico base station M1, P1, P2 and the serving gateway SGW.

The X2 interface is added in 3GPP LTE standard primarily in order to transfer the user plane signal and the control plane signal during handover.

The serving gateway SGW performs routing of the IP user data between the macro base station M1 and the pico base stations P1 and P2 respectively, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE6 and the respective serving macro base station M1 or pico base station P1, P2.

The mobility management entity MME performs tasks of the subscriber management and the session management, and also performs the mobility management during handover between different access networks.

The pico base stations P1 and P2 and the related coverage area CP1 and CP2 of the pico cells are placed under the coverage area CM1 of the macro base station M1. Thus, the downlink transmission from the macro base station M1 and from the second pico base station P2 is the dominating source of interference on the downlink transmission to the user terminal UE3 served by the first pico base station P1 and being located in the border area to the pico cell served by the second pico base station P2.

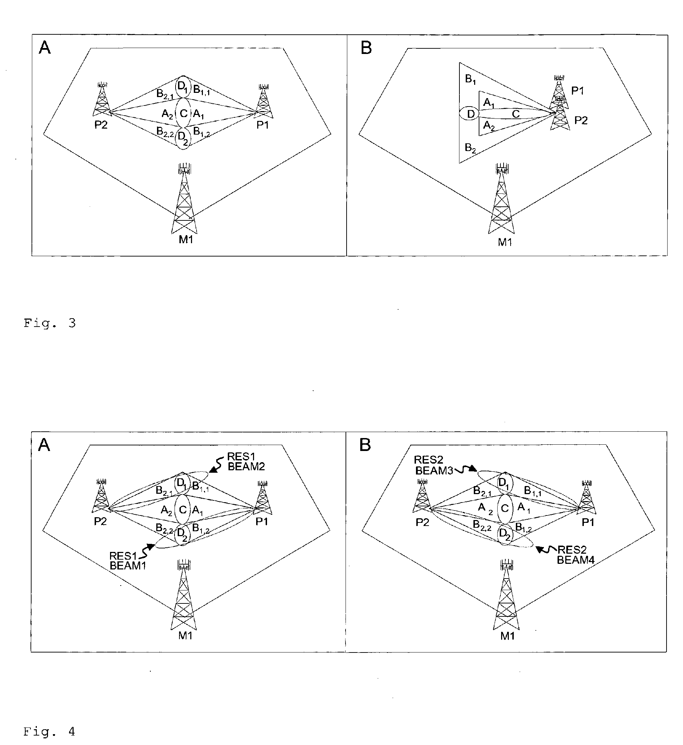

According to embodiments of the invention, methods for inter-cell interference-coordination by coordination of transmission from the macro base station M1 and from the pico base stations P1 and P2 with a reduced pico-to-pico interference and at the same time with a high resource usage are proposed and will be described below under figs. 4, 5 and 6.

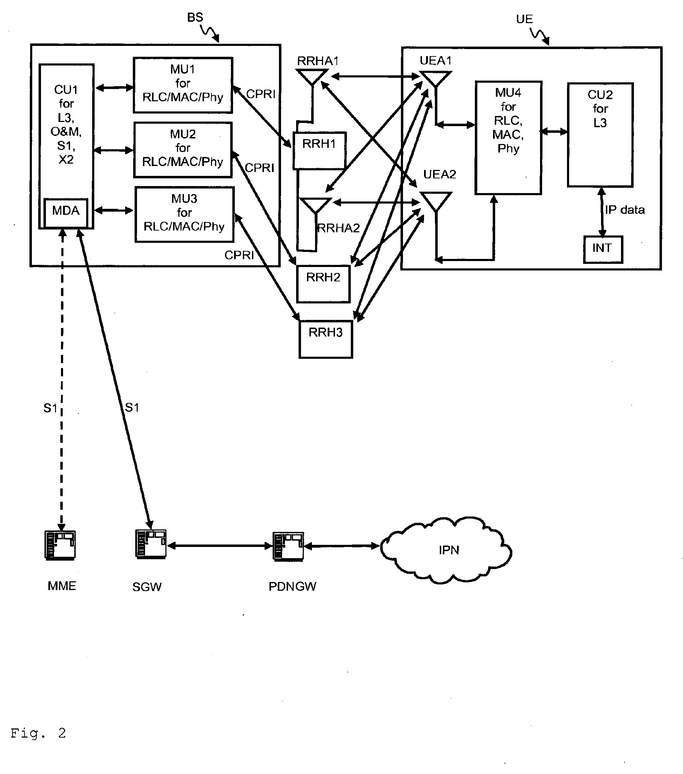

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, methods for inter-cell interference-coordination by coordination of transmission from the macro base station M1 and from the pico base stations P1 and P2 as e.g. depicted in fig. 1 with a reduced pico-to-pico interference and at the same time with a high resource usage are described according to embodiments of the invention.

Fig. 3 schematically shows the interference situation in heterogeneous networks comprising a macro base station M1 and two pico base stations P1 and P2 as e.g. depicted in fig. 1 with directional antennas and application of cell range extension.

The two pico base stations P1 and P2 are used to serve a single HotSpot, with fig. 3A on the left side showing the case of distributed pico base stations P1 and P2, and with fig. 3B on the right side showing the case of co-located pico base stations P1 and P2. As already mentioned above, the coverage area of the pico cells can be separated in different areas which highly differ in the interference situation for user terminals inside said areas.

In a first area Aₓ, with A₁ being served by the pico base station P1, and A₂ being served by the pico base station P2, a received signal from the serving pico base station P1 and P2 respectively is significantly higher than a received signal from the interfering macro base station M1 or the interfering pico base station P2 and P1 respectively. Thus, user terminals inside the first area A₁ or A₂ are operating at a positive SINR level and do not require the usage of dedicated interference management techniques. However, interference management techniques may further increase the performance.

In a second area B_{x,y} in case of distributed pico base stations P1 and P2, or Bₓ in case of co-located pico base stations P1 and P2, with B_{1,1}, B_{1,2} and B₁ being served by the pico base station P1, and with B_{2,1,} B_{2,2} and B₂ being served by the pico base station P2, a received signal from the serving pico base station P1 and P2 respectively is significantly higher than a received signal from the interfering pico base station P2 and P1 respectively, but due to the bias based CRE lower than a received signal from the interfering macro base station M1. Thus, user terminals inside the second area suffer from strong macro-to-pico interference and therefore may not be able to receive PDCCH and PDSCH with acceptable error rates.

In a third area C, a received signal from the serving pico base station P1 and P2 respectively is significantly higher than a received signal from the interfering macro base station M1, but a received signal from the interfering pico base station P2 and P1 respectively is nearly as high. Thus, user terminals inside the third area C suffer from high pico-to-pico interference.

In a fourth area Dₓ in case of distributed pico base stations P1 and P2, or D in case of co-located pico base stations P1 and P2, a received signal from the serving pico base station P1 and P2 respectively is lower than a received signal from the interfering macro base station M1 and is nearly as high as a received signal from the interfering pico base station P2 and P1 respectively. Thus, user terminals inside the fourth area suffer from high macro-to-pico and high pico-to-pico interference.

In order to maximize the system performance, the different interference situations in the different areas have to be addressed by corresponding ICIC mechanisms, which will be described in the following.

Fig. 4 schematically shows the handling of pico-pico interference in almost blank subframes in heterogeneous networks with a macro base station M1 and distributed pico base stations P1 and P2 as depicted in fig. 3A according to an embodiment of the invention.

In order to handle the macro-to-pico interference, eICIC is applied. The macro base station M1 uses a predefined pattern of ABS, in which the macro base station M1 transmits no data. The pico base stations P1 and P2 will preferably schedule the user terminals which would suffer from high macro-interference namely user terminals in the areas B_{x,y} and Dₓ, to said almost blank subframes. User terminals in the areas Aₓ and C are preferably scheduled to non-ABS.

The user terminals in the area D₁ and D₂ suffer not only from high macro-pico interference but also from high pico-pico interference. As shown in fig. 4, the areas D₁ and D₂ are spatially separated. Thus, the usage of ICIC mechanisms which can exploit the spatial separation of D₁ and D₂, as e.g. coordinated beamforming or implicit coordination based on location based scheduling of predefined specific time or frequency resources as e.g. described in the ARTIST4G consortium project report "D1.3 - Innovative advanced signal processing algorithms for interference avoidance", March, 2011, is suitable during ABS.

As depicted in fig. 4A, on certain time or frequency ABS resources RES1, the first pico base station P1 preferably serves user terminals in area D₂ and/or area B_{1,2} using at least one beam BEAM1, while the second pico base station P2 preferably serves user terminals in area D₁ and/or area B_{2,1} using at least one beam BEAM2.

On other time or frequency ABS resources RES2, the situation is vice versa, i.e. the first pico base station P1 preferably serves user terminals in area D₁ and/or area B_{1,1} using at least one beam BEAM3, while the second pico base station P2 preferably serves user terminals in area D₂ and/or area B_{2,2} using at least one beam BEAM4, which is depicted in fig. 4B.

By coordinating the beams BEAM1-BEAM4 in the described way, the interference from the non-serving pico base station is reduced for the user terminals e.g. in the areas D1 and D2. The mapping of certain ABS resources to preferably used beams, as e.g. the mapping of ABS resources RES1 to the beam BEAM1 and of ABS resources RES2 to the beam BEAM3 for the first pico base station P1, can be semi-statically configured, e.g. by Operation and Maintenance (O&M) or by a so-called SON algorithm (SON = Self Organizing Network), or fully dynamically configured if coordinated scheduling is applied e.g. by negotiations between the pico base stations P1 and P2 e.g. via an X2 interface.

To fully exploit the gains of the coordinated beamforming, a Channel Quality Information (CQI) feedback has to reflect the different interference situations in the different ABS resources RES1 and RES2. In case of LTE Rel. 10 this can be realized by the two so-called csi-MeasSubframeSets. The two csi-MeasSubframeSets are bitsets which restrict a user terminal to a determination of a CQI only on measurements in subframes which are indicated by the bitset. The csi-MeasSubframeSets can be user terminal specific and are configured by the serving base station. This enables the determination of up to two CQI measurements which can reflect interference situation in different subframes. To determine the different interference situation in ABS, the csi-MeasSubframeSets for user terminals located in the areas B_{x,y} and Dₓ would restrict the measurement to ABS only. Thereby one csi-MeasSubframeSet would indicate the subframes which reflect the interference situation in fig. 4A, i.e. ABS resources RES1, and the other csi-MeasSubframeSet would indicate the subframes which reflect the interference situation in fig. 4B, i.e. ABS resources RES2.

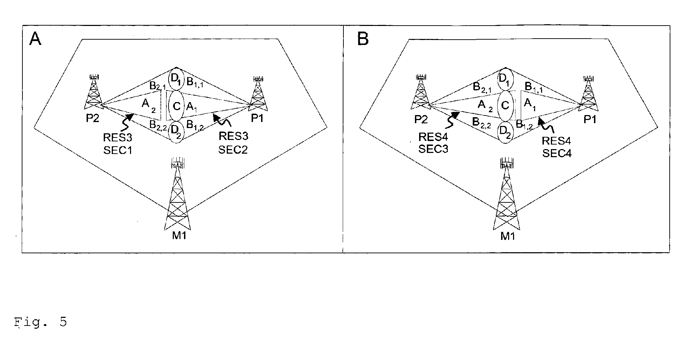

Fig. 5 schematically shows the handling of pico-pico interference in non almost blank subframes in heterogeneous networks with a macro base station M1 and distributed pico base stations P1 and P2 as depicted in fig. 3A according to an embodiment of the invention.

The user terminals in area C, which are preferably scheduled to non-ABS, suffer from high pico-pico interference. It can be seen in fig. 4, that the potential for handling this pico-pico interference by coordinated beamforming is much lower than it is for user terminals in the area D₁ or D₂ because the spatial separation is much lower. Therefore other interference management techniques may be better suited to address the pico-to-pico interference problem in non-ABS, as e.g. adaptive downtilts or vertical subsectorization e.g. arranged by multiple antenna elements resulting in separate beams based on distinct antenna parameters, as downtilt or half-power beamwidth as e.g. described in the paper from the authors O. Yilmaz, S. Hamalainen, J. Hamalainen with the title « System Level Analysis of Vertical Sectorization for 3GPP LTE », 6. ISWCS, Sept. 7-10, 2009.

The basic technique is shown in fig. 5. As depicted in fig. 5A on the left side, on certain non-ABS time or frequency resources RES3, the second pico base station P2 applies a higher downtilt leading to a sector SEC1 in which the channel quality is high enough to serve user terminals. Said sector SEC1 does not include the area C. This increases the received signal strength for user terminals which are located close to the second pico base station P2, i.e. user terminals in area A₂, and decreases the interference for user terminals in neighboring pico or macro cells, e.g. user terminals in areas C and A₁.

For the same non-ABS resources RES3, the first pico base station P1 does not increase its downtilt, i.e. it applies the same or a lower downtilt leading to a sector SEC2 in which the channel quality is high enough to serve user terminals. Said sector SEC2 includes the area C.

Together this results in a better SINR for user terminals in area C which are served by the first pico base station P1. To exploit the increased SINR, the first pico base station P1 will preferably schedule user terminals which are located in area C to said non-ABS resources RES3.

On other non-ABS resources RES4 the situation is vice versa as depicted in fig. 5B. The first pico base station P1 applies a higher downtilt leading to a sector SEC4 in which the channel quality is high enough to serve user terminals. Said sector SEC4 does not include the area C. This increases the received signal strength for user terminals which are located close to the first pico base station P1, i.e. user terminals in area A₁, and decreases the interference for user terminals in neighboring pico or macro cells, e.g. user terminals in areas C and A₂.

For the same other non-ABS resources RES4, the second pico base station P2 does not increase its downtilt, i.e. it applies the same or a lower downtilt leading to a sector SEC3 in which the channel quality is high enough to serve user terminals. Said sector SEC3 includes the area C. Thus, the second pico base station P2 will preferably serve its user terminals which are located in area C to said other non-ABS resources RES4.

The mapping of certain non-ABS resources to preferably used downtilts can be semi-statically configured, e.g. by Operation and Maintenance (O&M) or by a so-called SON algorithm (SON = Self Organizing Network), or fully dynamically configured if coordinated scheduling is applied e.g. by negotiations between the pico base stations P1 and P2 e.g. via an X2 interface which considers dynamic downtilts.

Based on the method described above, separate CQI feedbacks for the different interference situation in non-ABS may be determined.

Another possibility to handle pico-to-pico interference in non-ABS might be soft-frequency reuse. Thereby the first and the second pico base station P1 and P2 reduce the TX power for certain disjoint non-ABS resources. The first pico base station P1 schedules its user terminals in area C to the resources for which the second pico base station P2 uses a reduced TX power and vice versa.

Sector pattern adaptation may also be used to address the pico-to-pico interference in ABS and non-ABS. Thereby the first and the second pico base station P1 and P2 determine separate antenna pattern for ABS and non-ABS. Thereby the antenna patterns are calculated in a way that the SINR for the user terminals which are served in ABS or non-ABS is maximized.

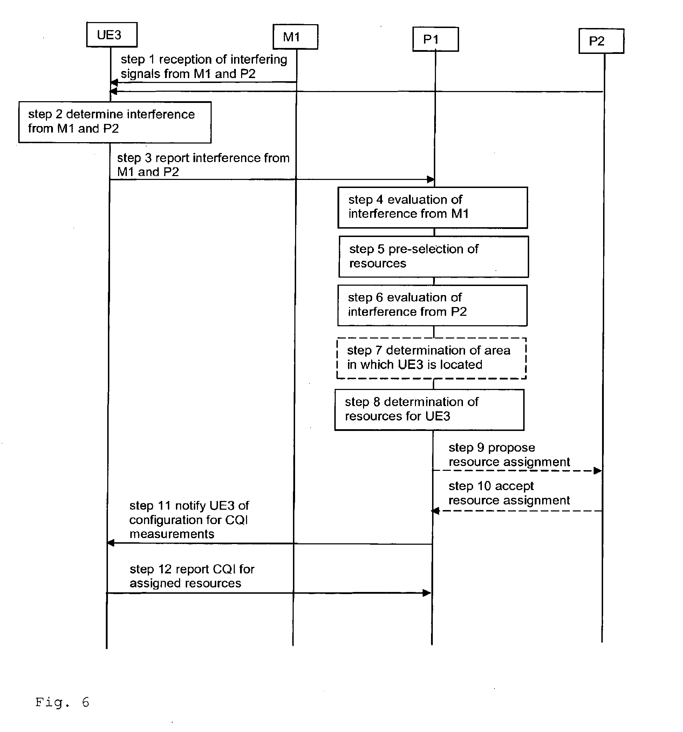

Fig. 6 schematically shows a message sequence chart for inter-cell interference-coordination by means of an appropriate resource assignment according to an embodiment of the invention.

Fig. 6 shows the transmission of signalling messages between the pico base stations P1 and P2, the macro base station M1, and the user terminals UE3 served by the pico base station P1 as e.g. depicted in fig. 1.

In step 1, the user terminal UE3 receives interfering signals from the macro base station M1 and the neighbouring pico base station P2.

In step 2, the user terminal UE3 determines values indicating the interference from the macro base station M1 and the neighbouring pico base station P2 based on the received interfering signals. Said value indicating the interference can be e.g. a CQI value for non-ABS comprising implicitly the interference from the macro base station M1. The CQI value decreases with increasing interference. As an alternative, said values indicating the interference from the macro base station M1 and the neighbouring pico base station P2 can be based on so-called RSRP-values (RSRP = Reference Signal Received Power) which are in turn based on the measured power of Reference Signals transmitted from the macro base station M1 and the neighbouring pico base station P2.

In step 3, the user terminal UE3 reports values indicating the interference from the macro base station M1 and the pico base station P2 to its serving pico base station P1.

In step 4, the pico base station P1 evaluates whether the value indicating the interference from the macro base station M1 is higher than a first threshold value. Said first threshold value can e.g. be the RSRP-value for Reference Signals transmitted from the pico base station P2 or a predefined threshold value.

In step 5, the pico base station P1 performs a preselection of resources for the user terminal UE3. If the interference from the macro base station M1 is higher than the first threshold value, almost blank subframes are preselected for the user terminal UE3 e.g. located in area B_{x,y}, Bₓ, or Dₓ depicted in fig. 3 and described above. If the interference from the macro base station M1 is lower than the first threshold value, non almost blank subframes are preselected for the user terminal UE3 e.g. located in area Aₓ or C depicted in fig. 3 and described above.

In step 6, the pico base station P1 evaluates in case that almost blank subframes are preselected for the user terminal UE3 whether the value indicating the interference from the pico base station P2 is higher than a second threshold value, which can e.g. be predefined. If the user terminal UE3 is e.g. located in area D or Dₓ depicted in fig. 3 and described above, it experiences interference from the pico base station P2 which is higher than the second threshold value. In case that non almost blank subframes are preselected for the user terminal UE3, the pico base station P1 evaluates whether the value indicating the interference from the pico base station P2 is higher than a third threshold value, which can e.g. be predefined. If the user terminal UE3 is e.g. located in area C depicted in fig. 3 and described above, it experiences interference from the pico base station P2 which is higher than the third threshold value.

In step 7, an estimation of an area in which the user terminal UE3 is located is performed in case that almost blank subframes are preselected for the user terminal UE3, and that the interference from the pico base station P2 is higher than the second threshold value. However, the step 7 is only necessary in case of distributed pico base stations P1 and P2 as e.g. depicted in fig. 4A, but it is not necessary in case of co-located pico base stations P1 and P2 as e.g. depicted in fig. 3B, as only in case of distributed pico base stations P1 and P2 non adjacent areas D₁ and D₂ exist in which the user terminal UE3 can be located in case that almost blank subframes are preselected for the user terminal UE3, and that the interference from the pico base station P2 is higher than the second threshold value. The estimation of the area in which the user terminal UE3 is located can e.g. be performed based on precoding matrix indicators (PMI) reported from the user terminal UE3, or based on uplink measurements which allow an estimation of the direction in which the user terminal UE3 is located, and thus allow an estimation whether the user terminal UE3 is located in area D₁ or D₂. As an alternative, the location of the user terminal UE3 can be estimated based on additional measurements, as e.g. RSRP-measurements from neighbouring base stations. Furthermore, the location of the user terminal UE3 can be determined based on positioning information as e.g. Global Positioning System measurements.

In step 8, appropriate resources are proposed for assignment to the user terminal UE3:
- in case that almost blank subframes are preselected for the user terminal UE3, and the value indicating the interference from the pico base station P2 is higher than the second threshold value, an assignment to resources within said almost blank subframes that are disturbed by an interference which is lower than the second threshold value is proposed for the user terminal UE3. In order to achieve an interference which is lower than the second threshold value, ICIC mechanisms as coordinated beamforming, implicit coordination or sector pattern adaptation as described above in fig. 4 can be used. This situation corresponds to the user terminal UE3 being located in area D or Dₓ in fig. 3.
- in case that non almost blank subframes are preselected for the user terminal UE3, and the value indicating the interference from the pico base station P2 is higher than the third threshold value, an assignment to resources within said non almost blank subframes that are disturbed by an interference which is lower than the third threshold value is proposed for the user terminal UE3. In order to achieve an interference which is lower than the third threshold value, ICIC mechanisms as adaptive downtilting, vertical subsectorization, soft frequency reuse or sector pattern adaptation as described above in fig. 5 can be used. This situation corresponds to the user terminal UE3 being located in area C in fig. 3.

In step 9, the proposed assignment to resources for the user terminal UE3 as described in step 8 is transmitted to the second pico base station P2 which assigns user terminals in the vicinity of the user terminal UE3 to resources different from the proposed ones.

In step 10, the second pico base station P2 transmits to the first pico base station P1 a message indicating the acceptance of the proposed assignment to resources for the user terminal UE3. As an alternative, if the second pico base station P2 does not accept the proposed assignment to resources for the user terminal UE3, it can send to the first pico base station P1 a proposal for an assignment to alternative resources for the user terminal UE3, which in turn the first pico base station P1 can accept or reject.

Steps 9 and 10 as described above are only necessary if an assignment to resources for the user terminal UE3 is dynamically configured by coordinated scheduling. As an alternative, said resources within said almost blank subframes or said resources within said non almost blank subframes as described above in step 8 are semi-statically configured by Operation and Maintenance or a self-organizing network.

In step 11, the first pico base station P1 notifies the user terminal UE3 of a configuration for CQI measurements on the assigned resources.

In step 12, the user terminal UE3 reports CQI values for the assigned resources. If the reported CQI values are below a predefined threshold value, either a handover can be triggered, or the user terminal UE3 can be regrouped starting again with step 1 of the resource assignment procedure described above.

In the embodiments described above and depicted e.g. in figs. 4, 5 and 6, the corresponding processing steps can be performed e.g. in the modem unit boards MU1-MU3 and the control unit board CU1 of the pico base station P1, P2, and in the modem unit board MU4 and the control unit board CU2 of the user terminals UE1-UE6 as depicted in fig. 2 and described above.

## Claims

1. A method for coordination of transmission from a first base station (M1) and at least two further base stations (P1, P2) having coverage areas lying within the coverage area of the first base station (M1), wherein
• user terminals that are served by one of the at least two further base stations (P1, P2) and that experience an interference from said first base station (M1) which is higher than a first threshold value are grouped in a first group and almost blank subframes are preselected for said user terminals of the first group,
• user terminals that are served by one of the at least two further base stations (P1, P2) and that experience an interference from said first base station (M1) which is lower than the first threshold value are grouped in a second group and non almost blank subframes are preselected for said user terminals of the second group,
• and user terminals of the first group that experience an interference from at least one of said at least two further base stations (P1, P2) which is higher than a second threshold value are assigned to resources (RES1, RES2) within said almost blank subframes that are disturbed by an interference which is lower than the second threshold value.

2. A method according to claim 1, wherein
• user terminals of the first group that experience an interference from at least one of said at least two further base stations (P1, P2) which is higher than the second threshold value are grouped in at least two non adjacent areas (D₁, D₂),
• and user terminals of the first group that experience an interference from at least one of said at least two further base stations (P1, P2) which is higher than the second threshold value are assigned to resources (RES1, RES2) within said almost blank subframes that are disturbed by an interference which is lower than the second threshold value dependent on the non adjacent area (D₁, D₂) in which they are located.

3. A method according to claim 1 or 2, wherein said user terminals of the first group that experience an interference from at least one of said at least two further base stations (P1, P2) which is higher than the second threshold value are assigned to resources (RES1, RES2) within said almost blank subframes using at least one of the group of coordinated scheduling, coordinated beamforming, implicit coordination, and sector pattern adaptation.

4. A method according to claim 2 or 3, wherein a determination in which of said at least two non adjacent areas (D₁, D₂) the user terminals of the first group that experience an interference from at least one of said at least two further base stations (P1, P2) which is higher than the second threshold value are located is performed based on at least one of the group of precoding matrix indicators of beams received with highest power at the user terminals, Reference Signal Received Power for reference signals from neighboring base stations, and position information from Global Positioning System measurements.

5. A method according to any of the preceding claims, wherein an assignment of user terminals of the second group that experience an interference from at least one of said at least two further base stations (P1, P2) which is higher than a third threshold value to resources (RES3, RES4) within said non almost blank subframes that are disturbed by an interference which is lower than the third threshold value is performed.

6. A method according to claim 5, wherein said resources (RES3, RES4) within said non almost blank subframes that cause an interference which is lower than the third threshold value are provided using at least one of the group of adaptive downtilting, vertical subsectorization, soft frequency reuse and sector pattern adaptation.

7. A method according to any of the preceding claims, wherein channel quality information is determined for said resources (RES1, RES2) within said almost blank subframes.

8. A method according to any of the claims 5, 6, or 7, wherein channel quality information is determined for said resources (RES3, RES4) within said non almost blank subframes.

9. A method according to any of the preceding claims, wherein said resources (RES1, RES2) within said almost blank subframes or said resources (RES3, RES4) within said non almost blank subframes are semi-statically configured by Operation and Maintenance or a self-organizing network, or dynamically configured by coordinated scheduling.

10. A method according to any of the preceding claims, wherein said first base station (M1) is a macro base station and said at least two further base stations (P1, P2) are pico base stations.

11. A base station (P1) for coordination of transmission from said base station (P1), a first base station (M1) and at least one further base station (P2), said base station (P1) and said at least one further base station (P2) having coverage areas lying within the coverage area of the first base station (M1), wherein the base station (P1) is adapted to
• group user terminals that experience an interference from said first base station (M1) which is higher than a first threshold value in a first group and preselect almost blank subframes for the user terminals of the first group,
• group user terminals that experience an interference from said first base station (M1) which is lower than the first threshold value in a second group and preselect non almost blank subframes for the user terminals of the second group,
• and assign user terminals of the first group that experience an interference from said at least one further base station (P2) which is higher than a second threshold value to resources (RES1, RES2) within said almost blank subframes that are disturbed by an interference which is lower than the second threshold value.

12. A base station (P1) according to claim 11, wherein the base station (P1) is adapted to
• group user terminals of the first group that experience an interference from said at least one further base station (P2) which is higher than the second threshold value in at least two non adjacent areas (D₁, D₂),
• and assign user terminals of the first group that experience an interference from said at least one further base station (P2) which is higher than the second threshold value to resources (RES1, RES2) within said almost blank subframes that are disturbed by an interference which is lower than the second threshold value dependent on the non adjacent area (D₁, D₂) in which they are located.

13. A base station (P1) according to claim 11 or 12, wherein the base station (P1) is adapted to perform an assignment of user terminals of the second group that experience an interference from said at least one further base station (P2) which is higher than a third threshold value to resources (RES3, RES4) within said non almost blank subframes that are disturbed by an interference which is lower than the third threshold value.

14. A communication network for mobile communication comprising at least one base station (P1) according to claim 11.

## Patentansprüche

1. Verfahren zur Koordination von Übertragungen von einer ersten Basisstation (M1) und mindestens zwei weiteren Basisstationen (P1, P2), deren Abdeckungsbereich innerhalb des Abdeckungsbereichs der ersten Basisstation (M1) liegt, wobei:
• Benutzerendgeräte, die von einer der mindestens zwei weiteren Basisstationen (P1, P2) bedient werden und in denen eine Interferenz von der besagten ersten Basisstation (M1) auftritt, die einen ersten Grenzwert überschreitet, in einer ersten Gruppe zusammengefasst werden und fast leere Teilrahmen für die besagten Benutzerendgeräte der ersten Gruppe vorausgewählt werden,
• Benutzerendgeräte, die von einer der mindestens zwei weiteren Basisstationen (P1, P2) bedient werden und in denen eine Interferenz von der besagten ersten Basisstation (M1) auftritt, die unter dem ersten Grenzwert liegt, in einer zweiten Gruppe zusammengefasst werden und nicht fast leere Teilrahmen für die besagten Benutzerendgeräte der zweiten Gruppe vorausgewählt werden,
• und Benutzerendgeräte der ersten Gruppe, in denen eine Interferenz von mindestens einer der besagten mindestens zwei weiteren Basisstationen (P1, P2) auftritt, die einen zweiten Grenzwert überschreitet, an Ressourcen (RES1, RES2) innerhalb der besagten fast leeren Teilrahmen, die von einer Interferenz, die unter dem zweiten Grenzwert liegt, gestört werden, zugewiesen werden.

2. Verfahren nach Anspruch 1, wobei
• Benutzerendgeräte der ersten Gruppe, in denen eine Interferenz von mindestens einer der besagten mindestens zwei weiteren Basisstationen (P1, P2) auftritt, die den zweiten Grenzwert überschreitet, in mindestens zwei nicht angrenzenden Bereichen (D₁, D₂) zusammengefasst werden,
• und Benutzerendgeräte der ersten Gruppe, in denen eine Interferenz von mindestens einer der besagten mindestens zwei weiteren Basisstationen (P1, P2) auftritt, die den zweiten Grenzwert überschreitet, an Ressourcen (RES1, RES2) innerhalb der besagten fast leeren Teilrahmen, die von einer Interferenz, die unter dem zweiten Grenzwert in Abhängigkeit von dem nicht angrenzenden Bereich (D1, D2) liegt, gestört werden, zugewiesen werden.

3. Verfahren nach Anspruch 1 oder 2, wobei die besagten Benutzerendgeräte der ersten Gruppe, in denen eine Interferenz von mindestens einer der besagten mindestens zwei weiteren Basisstationen (P1, P2) auftritt, die den zweiten Grenzwert überschreitet, unter Verwendung mindestens eines aus der Gruppe bestehend aus koordinierter Zeitplanung, koordiniertem Beamforming, implizierter Koordination und Sektormuster-Anpassung an Ressourcen (RES1, RES) innerhalb der besagten fast leeren Teilrahmen zugewiesen werden.

4. Verfahren nach Anspruch 2 oder 3, wobei die Ermittlung, in welchem der besagten zwei nicht angrenzenden Bereiche (D₁, D₂) sich die Benutzerendgeräte der ersten Gruppe, in denen eine Interferenz von mindestens einer der besagten mindestens zwei weiteren Basisstationen (P1, P2) auftritt, die den zweiten Grenzwert überschreitet, befinden, auf der Basis mindestens eines aus der Gruppe bestehend aus Vorcodierungsmatrix-Indikatoren von mit höchster Leistung an den Benutzerendgeräten empfangenen Strahlen, Referenzsignal-Empfangsleistung für Referenzsignale von benachbarten Basisstationen und Positionsinformationen aus Messwerten des globalen Positionsbestimmungssystem durchgeführt wird.

5. Verfahren nach einem beliebigen der vorstehenden Ansprüche, wobei eine Zuweisung von Benutzerendgeräten der zweiten Gruppe, in denen eine Interferenz von mindestens einer der besagten mindestens zwei weiteren Basisstation (P1, P2) auftritt, die einen dritten Grenzwert überschreitet, an Ressourcen (RES3, RES4) innerhalb der besagten nicht fast leeren Teilrahmen, welche von einer Interferenz, die niedriger ist als der besagte Grenzwert, gestört werden, durchgeführt wird.

6. Verfahren nach Anspruch 5, wobei die besagten Ressourcen (RES3, RES4) innerhalb der nicht fast leeren Teilrahmen, die eine Interferenz verursachen, die niedriger ist als der dritte Grenzwert, unter Verwendung mindestens eines aus der Gruppe bestehend aus adaptiver Abwärtsneigung, vertikaler Subsektorisierung, Soft-Frequenz-Wiederverwendung und Sektormuster-Anpassung bereitgestellt werden.

7. Verfahren nach einem beliebigen der vorstehenden Ansprüche, wobei Kanalqualitätsinformationen für die besagten Ressourcen (RES1, RES2) innerhalb der besagten fast leeren Teilrahmen ermittelt werden.

8. Verfahren nach einem beliebigen der Ansprüche 5, 6 oder 7, wobei die Kanalqualitätsinformationen für die besagten Ressourcen (RES3, RES4) innerhalb der besagten nicht fast leeren Teilrahmen ermittelt werden.

9. Verfahren nach einem beliebigen der vorstehenden Ansprüche, wobei die besagten Ressourcen (RES1, RES2) innerhalb der besagten fast leeren Teilrahmen oder die besagten Ressourcen (RES3, RES4) innerhalb der besagten nicht fast leeren Teilrahmen durch Betrieb und Wartung oder ein selbstorganisierendes Netzwerk halb-statisch konfiguriert werden, oder durch koordinierte Planung dynamisch konfiguriert werden.

10. Verfahren nach einem beliebigen der vorstehenden Ansprüche, wobei die besagte erste Basisstation (M1) eine Makro-Basisstation ist und die besagten mindestens zwei weiteren Basisstationen (P1, P2) Pico-Basisstationen sind.

11. Basisstation (P1) zur Koordination von Übertragungen von der besagten Basisstation (P1), einer ersten Basisstation (M1) und mindestens einer weiteren Basisstation (P2), wobei der Abdeckungsbereich der besagten Basisstation (P1) und der besagten mindestens einen weiteren Basisstation (P2) innerhalb des Abdeckungsbereichs der ersten Basisstation (M1) liegt, wobei die Basisstation (P1) für Folgendes ausgelegt ist:
• Zusammenfassen von Benutzerendgeräten, in denen eine Interferenz von der besagten ersten Basisstation (M1) auftritt, die einen ersten Grenzwert überschreitet, in einer ersten Gruppe, und Vorauswählen von fast leeren Teilrahmen für die Benutzerendgeräte der ersten Gruppe,
• Zusammenfassen von Benutzerendgeräten, in denen eine Interferenz von der besagten ersten Basisstation (M1) auftritt, die unter dem ersten Grenzwert liegt, in einer zweiten Gruppe, und Vorauswählen von nicht fast leeren Teilrahmen für die Benutzerendgeräte der zweiten Gruppe,
• und Zuweisen von Benutzerendgeräten der ersten Gruppe, in denen eine Interferenz von mindestens einer weiteren Basisstationen (P2) auftritt, die einen zweiten Grenzwert überschreitet, an Ressourcen (RES1, RES2) innerhalb der besagten fast leeren Teilrahmen, die von einer Interferenz, die unter dem zweiten Grenzwert liegt, gestört werden.

12. Basisstation (P1) nach Anspruch 11, wobei die Basisstation (P1) für Folgendes ausgelegt ist:
• Zusammenfassen der Benutzerendgeräte der ersten Gruppe, in denen eine Interferenz von mindestens einer weiteren Basisstationen (P2) auftritt, die den zweiten Grenzwert überschreitet, in mindestens zwei nicht angrenzenden Bereichen (D₁, D₂),
• und Zuweisen der Benutzerendgeräte der ersten Gruppe, in denen eine Interferenz von mindestens einer weiteren Basisstationen (P2) auftritt, die den zweiten Grenzwert überschreitet, an Ressourcen (RES1, RES2) innerhalb der besagten fast leeren Teilrahmen, die von einer Interferenz, die unter dem zweiten Grenzwert liegt, gestört werden, in Abhängigkeit von dem nicht angrenzenden Bereich (D₁, D₂), in dem sie sich befinden.

13. Basisstation (P1) nach Anspruch 11 oder 12, wobei die Basisstation (P1) für die Durchführung einer Zuweisung von Benutzerendgeräten der zweiten Gruppe, in denen eine Interferenz von der besagten mindestens einen weiteren Basisstation (P2) auftritt, die einen dritten Grenzwert überschreitet, an Ressourcen (RES3, RES4) innerhalb der besagten nicht fast leeren Teilrahmen, welche von einer Interferenz, die niedriger ist als der dritte Grenzwert, gestört werden, ausgelegt ist.

14. Kommunikationsnetzwerk für mobile Kommunikation, welches mindestens eine Basisstation (P1) gemäß Anspruch 11 umfasst.

## Revendications

1. Procédé de coordination de transmission entre une première station de base (M1) et au moins deux stations de base supplémentaires (P1, P2) présentant des zones de couverture situées dans la zone de couverture de la première station de base (M1), dans lequel
• des terminaux d'utilisateur, qui sont desservis par une parmi les au moins deux stations de base supplémentaires (P1, P2) et qui subissent un brouillage provenant de ladite première station de base (M1) qui est supérieur à une première valeur seuil, sont regroupés dans un premier groupe et des sous-trames presque vides sont présélectionnées pour lesdits terminaux d'utilisateur du premier groupe,
• des terminaux d'utilisateur, qui sont desservis par une parmi les au moins deux stations de base supplémentaires (P1, P2) et qui subissent un brouillage provenant de ladite première station de base (M1) qui est inférieur à la première valeur seuil, sont regroupés dans un deuxième groupe et des sous-trames non presque vides sont présélectionnées pour lesdits terminaux d'utilisateur du deuxième groupe,
• et des terminaux d'utilisateur du premier groupe, qui subissent un brouillage provenant d'au moins une desdites au moins deux stations de base supplémentaires (P1, P2) qui est supérieur à une deuxième valeur seuil, sont attribués à des ressources (RES1, RES2) dans lesdites sous-trames presque vides qui sont perturbées par un brouillage qui est inférieur à la deuxième valeur seuil.

2. Procédé selon la revendication 1, dans lequel
• des terminaux d'utilisateur du premier groupe, qui subissent un brouillage provenant d'au moins une desdites au moins deux stations de base supplémentaires (P1, P2) qui est supérieur à la deuxième valeur seuil, sont regroupés dans au moins deux zones non adjacentes (D₁, D₂),
• et des terminaux d'utilisateur du premier groupe, qui subissent un brouillage provenant d'au moins une desdites au moins deux stations de base supplémentaires (P1, P2) qui est supérieur à la deuxième valeur seuil, sont attribués à des ressources (RES1, RES2) dans lesdites sous-trames presque vides qui sont perturbées par un brouillage qui est inférieur à la deuxième valeur seuil en fonction de la zone non adjacente (D₁, D₂) dans laquelle ils sont situés.

3. Procédé selon la revendication 1 ou 2, dans lequel lesdits terminaux d'utilisateur du premier groupe, qui subissent un brouillage provenant d'au moins une desdites au moins deux stations de base supplémentaires (P1, P2) qui est supérieur à la deuxième valeur seuil, sont attribués à des ressources (RES1, RES2) dans lesdites sous-trames presque vides en utilisant au moins une action dans le groupe constitué de la planification coordonnée, de la formation de faisceau coordonnée, de la coordination implicite et de l'adaptation de modèle de secteur.

4. Procédé selon la revendication 2 ou 3, dans lequel la zone parmi lesdites au moins deux zones non adjacentes (D₁, D₂) dans laquelle les terminaux d'utilisateur du premier groupe, qui subissent un brouillage provenant d'au moins une desdites au moins deux stations de base supplémentaires (P1, P2) qui est supérieur à la deuxième valeur seuil, sont situés est déterminée sur la base d'au moins un élément parmi le groupe constitué d'indicateurs de matrice de précodage de faisceaux reçus avec une puissance maximum au niveau des terminaux d'utilisateur, une puissance reçue de signal de référence pour des signaux de référence provenant de stations de base voisines et des informations de position provenant de mesures du système de positionnement global.

5. Procédé selon l'une quelconque des revendications précédentes, dans lequel une attribution de terminaux d'utilisateur du deuxième groupe, qui subissent un brouillage provenant d'au moins une desdites au moins deux stations de base supplémentaires (P1, P2) qui est supérieur à une troisième valeur seuil, aux ressources (RES3, RES4) dans lesdites sous-trames non presque vides qui sont perturbées par un brouillage qui est inférieur à la troisième valeur seuil, est exécutée.

6. Procédé selon la revendication 5, dans lequel lesdites ressources (RES3, RES4) dans lesdites sous-trames non presque vides, qui entraînent un brouillage qui est inférieur à la troisième valeur seuil, sont fournies en utilisant au moins une action parmi le groupe constitué de l'inclinaison vers le bas adaptive, la sous-sectorisation verticale, la réutilisation de fréquence douce et l'adaptation de modèle de secteur.

7. Procédé selon l'une quelconque des revendications précédentes, dans lequel des informations de qualité de canal sont déterminées pour lesdites ressources (RES1, RES2) dans lesdites sous-trames presque vides.

8. Procédé selon l'une quelconque des revendications 5, 6 et 7, dans lequel des informations de qualité de canal sont déterminées pour lesdites ressources (RES3, RES4) dans lesdites sous-trames non presque vides.

9. Procédé selon l'une quelconque des revendications précédentes, dans lequel lesdites ressources (RES1, RES2) dans lesdites sous-trames presque vides ou lesdites ressources (RES3, RES4) dans lesdites sous-trames non presque vides sont configurées de manière semi-statique par exploitation et maintenance ou par un réseau auto-organisé ou configurées de manière dynamique par une planification coordonnée.

10. Procédé selon l'une quelconque des revendications précédentes, dans lequel ladite première station de base (M1) est une station de base macro et lesdites au moins deux stations de base supplémentaires (P1, P2) sont des stations de base pico.

11. Station de base (P1) pour la coordination de transmission à partir de ladite station de base (P1), d'une première station de base (M1) et d'au moins une station de base supplémentaire (P2), ladite station de base (P1) et ladite au moins une station de base supplémentaire (P2) présentant des zones de couverture situées dans la zone de couverture de la première station de base (M1), la station de base (P1) étant adaptée pour
• regrouper des terminaux d'utilisateur qui subissent un brouillage provenant de ladite première station de base (M1) qui est supérieur à une première valeur seuil dans un premier groupe et présélectionner des sous-trames presque vides pour les terminaux d'utilisateur du premier groupe,
• regrouper des terminaux d'utilisateur qui subissent un brouillage provenant de ladite première station de base (M1) qui est inférieur à la première valeur seuil dans un deuxième groupe et présélectionner des sous-trames non presque vides pour les terminaux d'utilisateur du deuxième groupe,
• et attribuer des terminaux d'utilisateur du premier groupe, qui subissent un brouillage provenant de ladite au moins une station de base supplémentaire (P2) qui est supérieur à une deuxième valeur seuil, à des ressources (RES1, RES2) dans lesdites sous-trames presque vides qui sont perturbées par un brouillage qui est inférieur à la deuxième valeur seuil.

12. station de base (P1) selon la revendication 11, la station de base (P1) étant adaptée pour
• regrouper des terminaux d'utilisateur du premier groupe, qui subissent un brouillage provenant de ladite au moins une station de base supplémentaire (P2) qui est supérieur à la deuxième valeur seuil, dans au moins deux zones non adjacentes (D₁, D₂),
• et attribuer des terminaux d'utilisateur du premier groupe, qui subissent un brouillage provenant de ladite au moins une station de base supplémentaire (P2) qui est supérieur à la deuxième valeur seuil, à des ressources (RES1, RES2) dans lesdites sous-trames presque vides qui sont perturbées par un brouillage qui est inférieur à la deuxième valeur seuil en fonction de la zone non adjacente (D₁, D₂) dans laquelle ils sont situés.

13. Station de base (P1) selon la revendication 11 ou 12, dans laquelle la station de base (P1) est adaptée pour exécuter une attribution de terminaux d'utilisateur du deuxième groupe, qui subissent un brouillage provenant de ladite au moins une station de base supplémentaire (P2) qui est supérieur à une troisième valeur seuil, aux ressources (RES3, RES4) dans lesdites sous-trames non presque vides qui sont perturbées par un brouillage qui est inférieur à la troisième valeur seuil.

14. Réseau de communication pour communication mobile comprenant au moins une station de base (P1) selon la revendication 11.
